# EUROPÄISCHE PATENTANMELDUNG

(11) **EP 4 195 334 A1**
(43) Veröffentlichungstag der Anmeldung: **14.06.2023**
(21) Anmeldenummer: 22211051.2
(22) Anmeldetag: 02.12.2022
(51) Int. Cl.: H01M 8/026, H01M 8/0206, H01M 8/0254, H01M 8/0265

(54) **OPTIMIERTE BIPOLARPLATTEN FÜR EINE BRENNSTOFFZELLE**

(30) Priorität: 08.12.2021 DE 102021213997
(71) Anmelder: Vitesco Technologies GmbH, 93055 Regensburg (DE)
(72) Erfinder: Zienicke, Egbert, 81737 München (DE); Hirth, Peter, 81737 München (DE)
(74) Vertreter: Vitesco Technologies

(57) **Zusammenfassung**

Die Erfindung betrifft eine Bipolarplatte (1) für eine Brennstoffzelle, wobei die Bipolarplatte (1) durch eine strukturierte Metallfolie (4) gebildet ist, welche zwischen einer ersten Elektrode (2, 3) und einer zweiten Elektrode (2, 3) angeordnet ist, wobei die Bipolarplatte (1) durch die Strukturierung der Metallfolie (4) zumindest einen ersten Strömungskanal (7) ausbildet, welcher zumindest einseitig von der ersten Elektrode (3) räumlich begrenzt wird, und weiterhin durch die Strukturierung der Metallfolie (4) zumindest einen zweiten Strömungskanal (8) ausbildet, welcher einseitig zumindest von der zweiten Elektrode (2) begrenzt wird, wobei durch den zumindest ersten Strömungskanal (7) Wasserstoff strömbar ist, und durch den zumindest zweiten Strömungskanal (8) Sauerstoff strömbar ist, wobei der erste Strömungskanal (7) und/oder der zweite Strömungskanal (8) jeweils einen Ausgangsströmungsquerschnitt aufweisen, wobei der erste Strömungskanal (7) und/oder der zweite Strömungskanal (8) entlang ihrer axialen Durchströmungsrichtung Abschnitte mit im Vergleich zum Ausgangsströmungsquerschnitt verkleinerten Strömungsquerschnitts und/oder Abschnitte mit im Vergleich zum Ausgangsströmungsquerschnitt vergrößerten Strömungsquerschnitts aufweist.

## Beschreibung

### Technisches Gebiet

Die Erfindung betrifft eine Bipolarplatte für eine Brennstoffzelle, wobei die Bipolarplatte durch eine strukturierte Metallfolie gebildet ist, welche zwischen einer ersten Elektrode und einer zweiten Elektrode angeordnet ist, wobei die Bipolarplatte durch die Strukturierung der Metallfolie zumindest einen ersten Strömungskanal ausbildet, welcher zumindest einseitig von der ersten Elektrode räumlich begrenzt wird, und weiterhin durch die Strukturierung der Metallfolie zumindest einen zweiten Strömungskanal ausbildet, welcher einseitig zumindest von der zweiten Elektrode begrenzt wird, wobei durch den zumindest ersten Strömungskanal Wasserstoff strömbar ist, und durch den zumindest zweiten Strömungskanal Sauerstoff strömbar ist, wobei der erste Strömungskanal und/oder der zweite Strömungskanal jeweils einen Ausgangsströmungsquerschnitt aufweisen.

### Stand der Technik

Moderne Brennstoffzellen sind in einer sogenannten Stapelbauweise aufgebaut. Die so erzeugten Stapel (Stacks) bilden hintereinander geschaltete Elektrolysebereiche. Die Stapel erfüllen dabei mehrere Aufgaben. Einerseits bilden sie die metallisch leitende Verbindung zwischen den Elektroden der Brennstoffzelle. Weiterhin bilden sie durch ihre Geometrie die Zuleitungskanäle für den gasförmigen Wasserstoff, welcher als Brennstoff genutzt wird, zur Kathode, und den Zuleitungskanal für gasförmigen Sauerstoff, welcher als Bestandteil der Luft vorliegt, zur Anode der Brennstoffzelle. Je nach Aufbau der jeweiligen Brennstoffzelle können zusätzlich mit Wasser oder Luft beaufschlagte Kühlkanäle vorgesehen sein, die beispielsweise abwechselnd zu den wasserstoff- und luftführenden Kanälen angeordnet sind.

Die Effizienz einer Brennstoffzelle ist dabei im Wesentlichen von der Geschwindigkeit der chemischen Umsetzung der an die Kathode und die Anode geführten Stoffe bestimmt. Insbesondere eine laminare Strömung der Stoffe in den jeweiligen Kanälen ist hierbei einer hohen Umsetzungsgeschwindigkeit hinderlich.

Auch die Kühlkapazität der Brennstoffzelle ist durch laminare Strömung in den jeweiligen Kanälen begrenzt, wodurch gegebenenfalls nicht die volle Leistung erzeugt werden kann, da die Kühlung dafür nicht ausreichend ist.

### Darstellung der Erfindung, Aufgabe, Lösung, Vorteile

Daher ist es die Aufgabe der vorliegenden Erfindung ein Bipolarplatte für eine Brennstoffzelle zu schaffen, welche es erlaubt eine optimierte Durchströmung der jeweiligen von der Bipolarplatte ausgebildeten Strömungskanälen zu erreichen.

Die Aufgabe hinsichtlich der Bipolarplatte wird durch eine Bipolarplatte mit den Merkmalen von Anspruch 1 gelöst.

Ein Ausführungsbeispiel der Erfindung betrifft eine Bipolarplatte für eine Brennstoffzelle, wobei die Bipolarplatte durch eine strukturierte Metallfolie gebildet ist, welche zwischen einer ersten Elektrode und einer zweiten Elektrode angeordnet ist, wobei die Bipolarplatte durch die Strukturierung der Metallfolie zumindest einen ersten Strömungskanal ausbildet, welcher zumindest einseitig von der ersten Elektrode räumlich begrenzt wird, und weiterhin durch die Strukturierung der Metallfolie zumindest einen zweiten Strömungskanal ausbildet, welcher einseitig zumindest von der zweiten Elektrode begrenzt wird, wobei durch den zumindest ersten Strömungskanal Wasserstoff strömbar ist, und durch den zumindest zweiten Strömungskanal Sauerstoff strömbar ist, wobei der erste Strömungskanal und/oder der zweite Strömungskanal jeweils einen Ausgangsströmungsquerschnitt aufweisen, wobei der erste Strömungskanal und/oder der zweite Strömungskanal entlang ihrer axialen Durchströmungsrichtung Abschnitte mit im Vergleich zum Ausgangsströmungsquerschnitt verkleinerten Strömungsquerschnitts und/oder Abschnitte mit im Vergleich zum Ausgangsströmungsquerschnitt vergrößerten Strömungsquerschnitts aufweist.

Die Bipolarplatte ist gebildet durch die gewellte Metallfolie, welche mehrere Strömungskanäle ausbildet, die von unterschiedlichen Medien durchströmbar sind. Um die Strömungskanäle räumlich vollständig zu begrenzen sind beidseitig der Metallfolie Elektroden angeordnet. Zwischen den in der Metallfolie ausgebildeten Strukturen und den Elektroden sind die jeweiligen Strömungskanäle ausgebildet, welcher entlang einer axialen Hauptdurchströmungsrichtung durchströmt werden können.

Die Strömungskanäle können dabei gleichsinnig oder gegensinnig durchströmt werden, wobei eine gegensinnige Durchströmung insbesondere dann vorteilhaft ist, wenn ein Wärmeübertrag in zueinander benachbarten Strömungskanälen strömenden Medien erreicht werden soll.

Um die chemischen Reaktionen zu ermöglichen, welche in einer Brennstoffzelle zum Zwecke der Stromerzeugung ablaufen, wirkt eine der Elektroden als Kathode und die jeweils andere Elektrode als Anode. Bevorzugt sind die Strömungskanäle, welcher zumindest teilweise von der Anode räumlich begrenzt werden dazu eingerichtet mit Wasserstoff durchströmt zu werden, während die von der Kathode zumindest teilweise räumlich begrenzten Strömungskanäle dazu eingerichtet sind mit Sauerstoff, der beispielsweise in der Umgebungsluft enthalten ist, durchströmt zu werden.

Es ist besonders wichtig, dass die jeweils an den Elektroden anliegenden Scheitelpunkte der gewellten Metallfolie fluiddicht mit den Elektroden verbunden sind, um Leckagen und so gegebenenfalls ein Vermischen der Medien in den unterschiedlichen Strömungskanälen zu vermeiden.

Die im Stand der Technik bekannten Metallfolien in Bipolarplatten sind derart ausgebildet, dass die Strömungskanäle entlang ihrer axialen Erstreckung, welche mit der Hauptdurchströmungsrichtung übereinstimmt, einen gleichbleibenden Durchströmungsquerschnitt aufweisen. Die Geometrie des Strömungskanals ändert sich somit nicht entlang seiner axialen Erstreckung.

In der erfindungsgemäßen Ausführung ist vorgesehen, dass der Durchströmungsquerschnitt der Kanäle sich entlang der axialen Erstreckung verändert, so dass die Fluidströmung einen sich veränderten Strömungsquerschnitt durchströmt. Hierdurch wird dem strömenden Fluid neben der axialen Ausbreitungsgeschwindigkeit auch eine Geschwindigkeitskomponente in radialer Richtung aufgeprägt, wodurch der Wärmetransport verbessert wird und auch der Transport des jeweiligen Fluids an die entsprechende Elektrode.

Besonders vorteilhaft ist es, wenn der erste Strömungskanal und/oder der zweite Strömungskanal in seiner axialen Durchströmungsrichtung einen sich wechselweise über den Ausgangsquerschnitt vergrößernden und/oder verkleinernden Strömungsquerschnitt aufweist. Durch eine wechselweise Veränderung des Durchströmungsquerschnitts kann ein besonders vorteilhafte Strömungsbeeinflussung erreicht werden, indem die Strömung möglichst turbulent wird, wodurch der Wärmeübertrag und der Fluidtransport an die Reaktionsflächen der Elektroden weiterhin verbessert wird.

Da die einzelnen Strömungskanäle durch die Wellung in der Metallfolie gebildet sind, führt eine Vergrößerung des Durchströmungsquerschnitts eines Strömungskanals zwangsläufig zu einer Verkleinerung des Durchströmungsquerschnitts des direkt dazu benachbarten Strömungskanals.

Auch ist es vorteilhaft, wenn zumindest einer der Strömungskanäle turbulenzerzeugende Elemente an der durch die Metallfolie gebildeten räumlichen Begrenzung des Strömungsquerschnitts aufweist. Turbulenzerzeugende Elemente können beispielsweise in die Kanalwand eingeprägte Strukturen sein, hierzu zählen insbesondere Riefen, Sicken, Dellen sowie andersartige Vertiefungen oder Ausbeulungen. Besonders bevorzugt können Strukturen eingeprägt werden wie knopfartige Vertiefungen oder halbkugelförmige Vertiefungen. Auch können Ausstülpungen vorgesehen sein, welche in die jeweiligen Strömungskanäle hineinragen. Es muss jedoch sichergestellt sein, dass die Metallfolie als solches nicht verletzt wird, wodurch eine Undichtigkeit des jeweiligen Strömungskanals erzeugt werden würde.

Ein bevorzugtes Ausführungsbeispiel ist dadurch gekennzeichnet, dass zumindest einer der Strömungskanäle eine abschnittsweise Verkleinerung des Strömungsquerschnittes gegenüber dem Ausgangsströmungsquerschnitt aufweist, wobei das Verhältnis vom Ausgangsströmungsquerschnitt (A_{K}) zum verkleinerten Strömungsquerschnitt (Aₘᵢₙ) dem Verhältnis Aₘᵢₙ = 0,7 * A_{K} entspricht.

Das vorgenannte Verhältnis stellt einen unteren Grenzbereich dar, welcher bevorzugt nicht unterschritten wird. Dies ist vorteilhaft, um insbesondere bei den üblicherweise vorliegenden Größenverhältnissen für die Wellung der Metallfolie für eine Brennstoffzellenanwendung die Fluidströmung nicht negativ zu beeinflussen. Bei einer für eine Bipolarplatte verwendeten Metallfolie ist ein Pitch von 4 mm und eine Wellhöhe von 1 mm typisch, wobei der Pitch den Abstand zweier zueinander benachbarter Strukturmaxima beschreibt und die Wellhöhe den Höhenunterschied zwischen zueinander direkt benachbarten Strukturmaxima und Strukturminima (Wellenberg und Wellental).

Auch ist es zu bevorzugen, wenn zumindest einer der Strömungskanäle eine abschnittsweise Vergrößerung des Strömungsquerschnittes gegenüber dem Ausgangsströmungsquerschnitt aufweist, wobei das Verhältnis vom Ausgangsströmungsquerschnitt (A_{K}) zum vergrößerten Strömungsquerschnitt (Aₘₐₓ) dem Verhältnis Aₘₐₓ = 1,3 * A_{K} entspricht.

Das vorgenannte Verhältnis stellt einen oberen Grenzbereich dar, welcher bevorzugt nicht überschritten wird. Dies ist vorteilhaft, um insbesondere bei den üblicherweise vorliegenden Größenverhältnissen für die Wellung der Metallfolie für eine Brennstoffzellenanwendung die Fluidströmung nicht negativ zu beeinflussen.

Darüber hinaus ist es vorteilhaft, wenn die Vergrößerung und/oder Verkleinerung des ersten Strömungskanals und/oder des zweiten Strömungskanals durch eine geometrische Strukturierung erreicht wird, wobei die geometrische Strukturierung zusätzlich zur axialen Hauptgeschwindigkeitskomponente des jeweils im Strömungskanal strömbaren Mediums eine radiale Geschwindigkeitskomponente aufprägt. Ein radiale Geschwindigkeitskomponente zeichnet sich insbesondere dadurch aus, dass sie in einer Richtung quer zur Hauptdurchströmungsrichtung verläuft. Eine geometrische Strukturierung könnte beispielsweise eine eingeprägte Struktur sein oder auch eingeprägte Formelemente.

Weiterhin ist es vorteilhaft, wenn die die Strömungskanäle begrenzenden Wände entlang der axialen Durchströmungsrichtung eine Wellung aufweisen. Eine Wellung ist besonders dann vorteilhaft, wenn sie eine periodische Veränderung der Größe des Strömungskanals entlang der Hauptdurchströmungsrichtung erzeugt. Die Metallfolie weist damit beispielsweise zwei Wellungen auf, wobei die erste Wellung die eigentlichen Strömungskanäle ausbildet und die zweite Wellung sich in einer Richtung quer dazu erstreckt.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: einen Schnitt durch eine Bipolarplatte mit einer Metallfolie, welcher zwischen zwei Elektroden Strömungskanäle ausbildet,
- Fig. 2: eine Schnittansicht durch eine Bipolarplatte nach Figur 1, wobei die Wellung der Metallfolie zumindest abschnittsweise verändert ist,
- Fig. 3: eine Schnittansicht durch eine Bipolarplatte nach Figur 2, wobei die Wellung der Metallfolie zumindest abschnittsweise verändert ist,
- Fig. 4: eine Schnittansicht durch eine Bipolarplatte, wobei die Metallfolie turbulenzerzeugende Elemente aufweist, welche den Durchströmungsquerschnitt zumindest abschnittsweise vergrößern beziehungsweise verkleinern, und
- Fig. 5: eine Schnittansicht durch eine Bipolarplatte, mit einer im Vergleich zur Figur 3 alternativen Ausgestaltung der turbulenzerzeugenden Elemente an der Metallfolie.

### Bevorzugte Ausführung der Erfindung

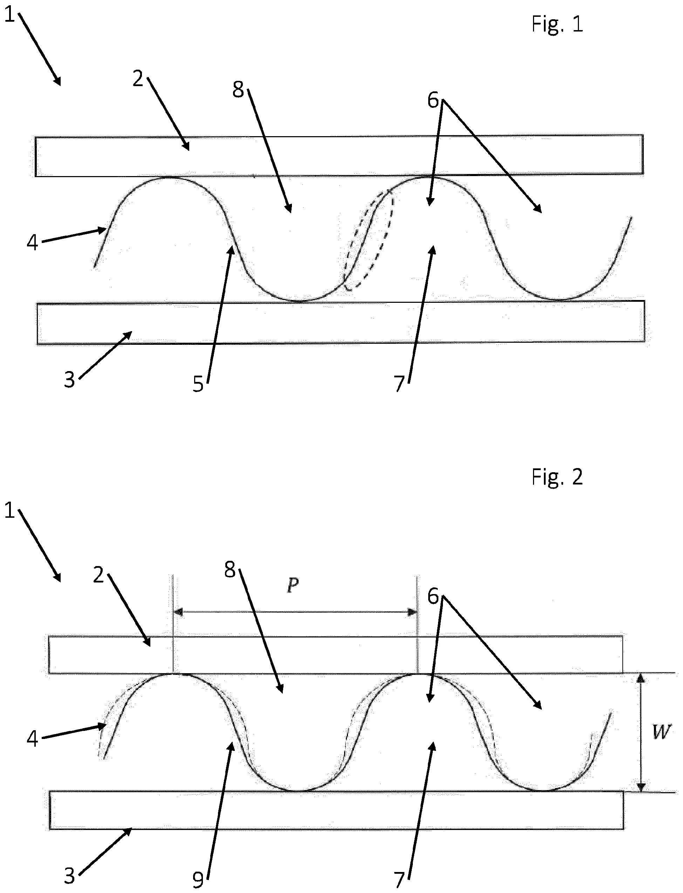

Die Figur 1 zeigt eine Schnittansicht durch eine Bipolarplatte 1 mit einer Elektrode 2, welcher als Kathode dient, einer Elektrode 3, welche als Anode dient, und einer zwischen den Elektroden 2 und 3 angeordneten Metallfolie 4. Die Metallfolie 4 weist eine Wellung 5 auf, welche durch eine Wellhöhe W und einen Pitch p definiert ist. Die Wellhöhe W gibt dabei die Höhendifferenz von aufeinanderfolgenden Wellenbergen und Wellentälern an, wobei der Pitch den Abstand von zueinander benachbarten Wellentälern beziehungsweise zwei zueinander benachbarten Wellenbergen angibt.

Die Metallfolie 4 bildet zwischen den Elektroden 2 und 3 Strömungskanäle 6 aus welche von den in einer Brennstoffzelle genutzten Fluiden durchströmt werden können. Erste Strömungskanäle 7 werden im Betrieb mit Wasserstoff durchströmt und zweite Strömungskanäle 8 werden mit Sauerstoff durchströmt. Die Kathode 2 schließt mit der Metallfolie 4 zusammen die zweiten Strömungskanäle 8 fluiddicht ab und die Anode 3 schließt mit der Metallfolie 4 die ersten Strömungskanäle 7 fluiddicht ab.

Abhängig vom Aufbau der Brennstoffzelle kann ein Teil der Strömungskanäle dazu verwendet werden, um mit einem Kühlmedium beaufschlagt zu werden.

Die Wellung 5 weist in Figur 1 beispielhaft einen sinusförmigen Verlauf. Auch abweichende Wellungen können hier vorgesehen werden.

Die nachfolgenden Figuren 2 bis 5 basieren auf der oben beschriebenen Figur 1. Identische Elemente weisen daher auch identische Bezugszeichen auf oder werden gegebenenfalls nicht noch einmal explizit erwähnt.

Die Figur 2 zeigt eine Bipolarplatte 1 gemäß Figur 1. Im Unterschied zur Figur 1 ist die Wellung 9 abweichend ausgebildet. Die Flanken, welche die jeweiligen Wellentäler und Wellenberge miteinander verbinden, sind wesentlich steiler ausgebildet. Darüber hinaus sind insbesondere die den Wasserstoff transportierenden ersten Strömungskanäle 7 breiter ausgebildet, wodurch die den Sauerstoff transportierenden zweiten Kanäle 8 schmaler werden. Insbesondere ist der Durchströmungsquerschnitt der ersten Kanäle 7 und der zweiten Kanäle 8 verändert.

In Figur 2 ist somit eine zumindest abschnittsweise Veränderung der Durchströmungsquerschnitte der Kanäle 7, 8 erreicht. In einem Schnitt, welcher in axialer Richtung vor oder hinter der in Figur 2 gezeigten Schnittebene liegt, könnte eine abweichende Gestaltung mit anderen Durchströmungsquerschnitten sudgebildet sein.

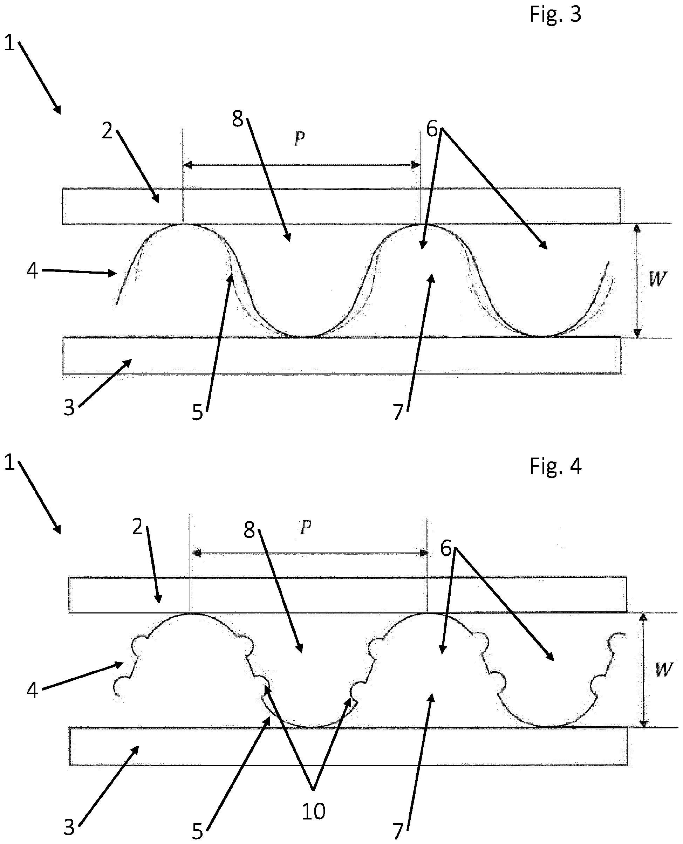

Figur 3 zeigt eine Art Inversion der Metallfolie 4 gegenüber der Figur 2. Die Flanken sind ebenfalls steiler als im Ursprungszustand ausgebildet, wobei nun die zweiten Strömungskanäle 8 breiter ausgebildet sind als die ersten Strömungskanäle 7.

Figur 4 zeigt eine Ausführungsform der Bipolarplatte 1, wobei die Metallfolie 4 eingeprägte Strukturen 10 aufweist, welche sich im Schnitt als halbkreisförmige Vertiefungen darstellen. Diese sind in Figur 4 derart ausgerichtet, dass sie von der Metallfolie in die zweiten Strömungskanäle 8 hineinragen und somit deren Durchströmungsquerschnitt verringern, während sie den Durchströmungsquerschnitt der ersten Strömungskanäle 7 vergrößern.

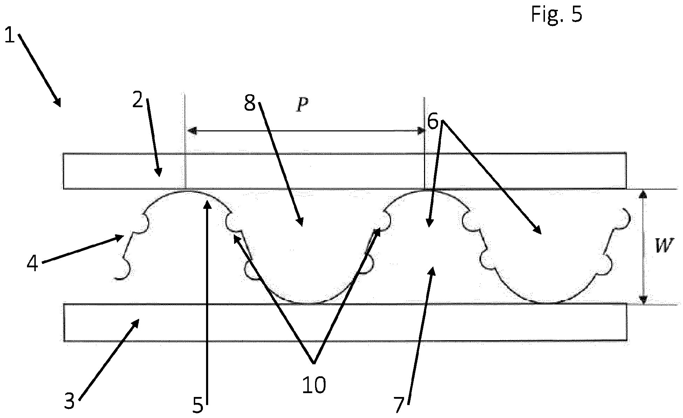

Figur 5 zeigt schließlich eine alternative Ausgestaltung der eingeprägten Strukturen 11, wobei die im Schnitt halbkreisförmigen Vertiefungen in die ersten Strömungskanäle 7 hineinragen und so deren Durchströmungsquerschnitt verkleinern, währen sie den Durchströmungsquerschnitt der zweiten Strömungskanäle 8 vergrößern.

Es wird darauf hingewiesen, dass alle in den Figuren 1 bis 5 gezeigten Schnitte jeweils einen spezifischen Ausschnitt an jeweils einer Stelle der axialen Erstreckung aus der jeweiligen Bipolarplatte zeigen. Erfindungsgemäß kann es bevorzugterweise vorgesehen sein, dass der Durchströmungsquerschnitt einzelner Kanäle oder aller Kanäle zumindest abschnittsweise veränderlich ist entlang der axialen Erstreckung.

Die unterschiedlichen Merkmale der einzelnen Ausführungsbeispiele können auch untereinander kombiniert werden.

Die Ausführungsbeispiele der Figuren 1 bis 5 weisen insbesondere keinen beschränkenden Charakter auf und dienen der Verdeutlichung des Erfindungsgedankens.

### Bezugszeichenliste

- 1.: Bipolarplatte
- 2.: Elektrode
- 3.: Elektrode
- 4.: Metallfolie
- 5.: Wellung
- 6.: Strömungskanäle
- 7.: erste Strömungskanäle
- 8.: zweite Strömungskanäle
- 9.: Wellung
- 10.: eingeprägte Struktur
- W: Wellhöhe
- p: Pitch

## Patentansprüche

1. Bipolarplatte (1) für eine Brennstoffzelle, wobei die Bipolarplatte (1) durch eine strukturierte Metallfolie (4) gebildet ist, welche zwischen einer ersten Elektrode (2, 3) und einer zweiten Elektrode (2, 3) angeordnet ist, wobei die Bipolarplatte (1) durch die Strukturierung der Metallfolie (4) zumindest einen ersten Strömungskanal (7) ausbildet, welcher zumindest einseitig von der ersten Elektrode (3) räumlich begrenzt wird, und weiterhin durch die Strukturierung der Metallfolie (4) zumindest einen zweiten Strömungskanal (8) ausbildet, welcher einseitig zumindest von der zweiten Elektrode (2) begrenzt wird, wobei durch den zumindest ersten Strömungskanal (7) Wasserstoff strömbar ist, und durch den zumindest zweiten Strömungskanal (8) Sauerstoff strömbar ist, wobei der erste Strömungskanal (7) und/oder der zweite Strömungskanal (8) jeweils einen Ausgangsströmungsquerschnitt aufweisen, **dadurch gekennzeichnet, dass** der erste Strömungskanal (7) und/oder der zweite Strömungskanal (8) entlang ihrer axialen Durchströmungsrichtung Abschnitte mit im Vergleich zum Ausgangsströmungsquerschnitt verkleinerten Strömungsquerschnitts und/oder Abschnitte mit im Vergleich zum Ausgangsströmungsquerschnitt vergrößerten Strömungsquerschnitts aufweist.

2. Bipolarplatte (1) nach Anspruch 1, **dadurch gekennzeichnet, dass** der erste Strömungskanal (7) und/oder der zweite Strömungskanal (8) in seiner axialen Durchströmungsrichtung einen sich wechselweise über den Ausgangsquerschnitt vergrößernden und/oder verkleinernden Strömungsquerschnitt aufweist.

3. Bipolarplatte (1) nach einem der vorhergehenden Ansprüche, **dadurch gekennzeichnet, dass** zumindest einer der Strömungskanäle (7, 8) turbulenzerzeugende Elemente (10) an der durch die Metallfolie (4) gebildeten räumlichen Begrenzung des Strömungsquerschnitts aufweist.

4. Bipolarplatte (1) nach einem der vorhergehenden Ansprüche, **dadurch gekennzeichnet, dass** zumindest einer der Strömungskanäle (7, 8) eine abschnittsweise Verkleinerung des Strömungsquerschnittes gegenüber dem Ausgangsströmungsquerschnitt aufweist, wobei das Verhältnis vom Ausgangsströmungsquerschnitt (A_{K}) zum verkleinerten Strömungsquerschnitt (Aₘᵢₙ) dem Verhältnis Aₘᵢₙ = 0,7 * A_{K} entspricht.

5. Bipolarplatte (1) nach einem der vorhergehenden Ansprüche, **dadurch gekennzeichnet, dass** zumindest einer der Strömungskanäle (7, 8) eine abschnittsweise Vergrößerung des Strömungsquerschnittes gegenüber dem Ausgangsströmungsquerschnitt aufweist, wobei das Verhältnis vom Ausgangsströmungsquerschnitt (A_{K}) zum vergrößerten Strömungsquerschnitt (Aₘₐₓ) dem Verhältnis Aₘₐₓ = 1,3 * A_{K} entspricht.

6. Bipolarplatte (1) nach einem der vorhergehenden Ansprüche, **dadurch gekennzeichnet, dass** die Vergrößerung und/oder Verkleinerung des ersten Strömungskanals (7) und/oder des zweiten Strömungskanals (8) durch eine geometrische Strukturierung erreicht wird, wobei die geometrische Strukturierung zusätzlich zur axialen Hauptgeschwindigkeitskomponente des jeweils im Strömungskanal (7, 8) strömbaren Mediums eine radiale Geschwindigkeitskomponente aufprägt.

7. Bipolarplatte (1) nach einem der vorhergehenden Ansprüche, **dadurch gekennzeichnet, dass** die die Strömungskanäle (7, 8) begrenzenden Wände entlang der axialen Durchströmungsrichtung eine Wellung aufweisen.
